# EUROPEAN PATENT APPLICATION

(11) **EP 3 409 695 A1**
(43) Date of publication of application: **05.12.2018**
(21) Application number: 17744336.3
(22) Date of filing: 26.01.2017
(51) Int. Cl.: C08F 2/00, B32B 5/22, C01B 33/16

(54) **LOW-DENSITY GEL ARTICLE AND METHOD FOR PRODUCING LOW-DENSITY GEL ARTICLE**

(30) Priority: 26.01.2016 JP 2016012112
(71) Applicant: Kyoto University, Kyoto-shi, Kyoto 606-8501 (JP)
(72) Inventor: NAKANISHI Kazuki, Kyoto-shi Kyoto 606-8501 (JP); KANAMORI Kazuyoshi, Kyoto-shi Kyoto 606-8501 (JP)
(74) Representative: Cabinet Beau de Loménie
(86) International application number: PCT/JP2017/002786
(87) International publication number: WO 2017/131106

(57) **Abstract**

A low-density gel product of the present disclosure has a coating layer on a surface thereof, the coating layer being composed of a polymer of a gas-phase polymerizable monomer. The low-density gel product of the present disclosure has an improved mechanical strength. The low-density gel product is, for example, an aerogel or xerogel. The low-density gel product can be, for example, in the form of a monolithic body such as a sheet or in the form of particles. The gas-phase polymerizable monomer is, for example, at least one selected from an olefin, styrene, a styrene derivative, (meth)acrylic acid, a (meth)acrylic acid ester, para-xylylene, and a para-xylylene derivative.

## Description

### TECHNICAL FIELD

The present invention relates to a low-density gel product such as an aerogel or xerogel and a method for producing the low-density gel product.

### BACKGROUND ART

Low-density gel products such as aerogels and xerogels are solid-phase gel products having a high porosity and a low density as indicated by their name. The high porosity is attributed to the fact that the gel skeleton and fine pores having a pore size of about 1000 nm or less, preferably 100 nm or less, form a three-dimensional network structure. The low-density gel products exhibit distinctive properties based on this network structure, such as transparency, low specific gravity, high specific surface area, and very low thermal conductivity. Due to these properties, the low-density gel products are promising for use as light-transmissive thermal insulators, acoustic insulators, and carriers.

Specific examples of the low-density gel products include: silica aerogels and silica xerogels having a skeleton composed of silica (SiO₂); and aerogels and xerogels that are organic-inorganic hybrid gels having a skeleton composed of an organopolysiloxane such as a silsesquioxane (RSiO_{1.5}) structure. These low-density gels can be produced, for example, by a sol-gel process. Patent Literatures 1 and 2 each disclose an organic-inorganic hybrid aerogel produced using a sol-gel process and a method for producing the aerogel, and Non Patent Literature 1 discloses an organic-inorganic hybrid aerogel and organic-inorganic hybrid xerogel produced using a sol-gel process and methods for producing these gels.

### CITATION LIST

### Patent Literature

Patent Literature 1: WO 2005/110919 A1
Patent Literature 2: WO 2007/010949 A1

### Non Patent Literature

Non Patent Literature 1: Kazuyoshi Kanamori et al., "New Transparent Methylsilsesquioxane Aerogels and Xerogels with Improved Mechanical Properties", Advanced Materials, 2007, vol. 19, pp. 1589-1593

### SUMMARY OF INVENTION

### Technical Problem

The low-density gel products exhibit the above-mentioned distinctive properties attributed to their structure. Owing to the structure, however, they are brittle and have a mechanical strength which is not always satisfactory. The current situation is that the mechanical strength is insufficient to allow extension of applications exploiting the distinctive properties of the low-density gel products, such as to enable a low-density gel product in the form of a monolithic body such as a sheet to be used as a transparent thermal insulator and/or acoustic insulator.

An object of the present invention is to provide a low-density gel product with improved mechanical strength and a method for producing the low-density gel product.

### Solution to Problem

A low-density gel product according to the present disclosure has a coating layer on a surface thereof, the coating layer being composed of a polymer of a gas-phase polymerizable monomer.

A method for producing a low-density gel product according to the present disclosure is a method including allowing gas-phase polymerization of a gas-phase polymerizable monomer to take place in a system containing a low-density gel product as a precursor, thereby forming a coating layer composed of a polymer of the monomer on a surface of the precursor to obtain a low-density gel product having the coating layer on the surface thereof.

### Advantageous Effects of Invention

According to the present invention, a low-density gel product with improved mechanical strength can be obtained.

### BRIEF DESCRIPTION OF DRAWINGS

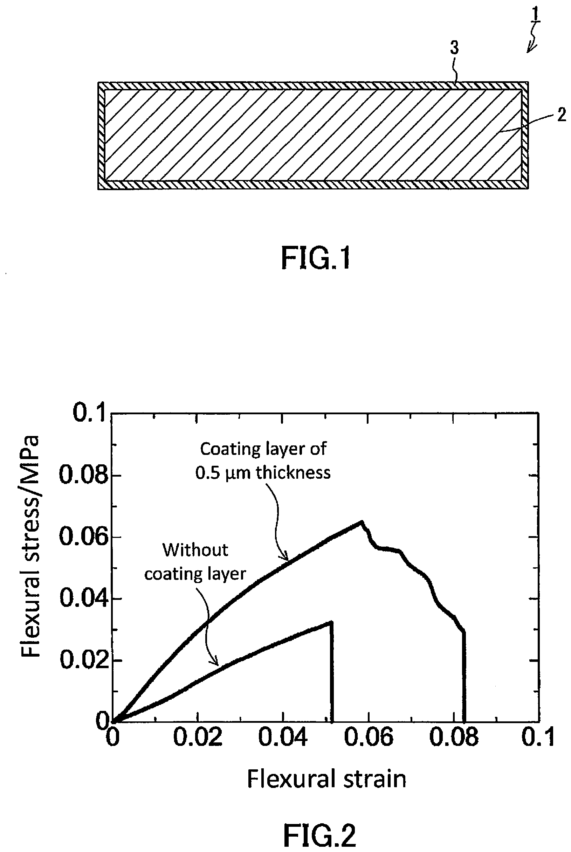

FIG. 1 is a cross-sectional view schematically showing an example of the low-density gel product of the present disclosure.
FIG. 2 is a graph showing results of a three-point flexural test conducted in examples for a low-density gel product produced in Production Example 1 which has no coating layer on the surface thereof and a low-density gel product produced in Example 1 which has a coating layer (thickness: 0.50 µm, thickness d2: 1.0 µm) on the surface thereof.

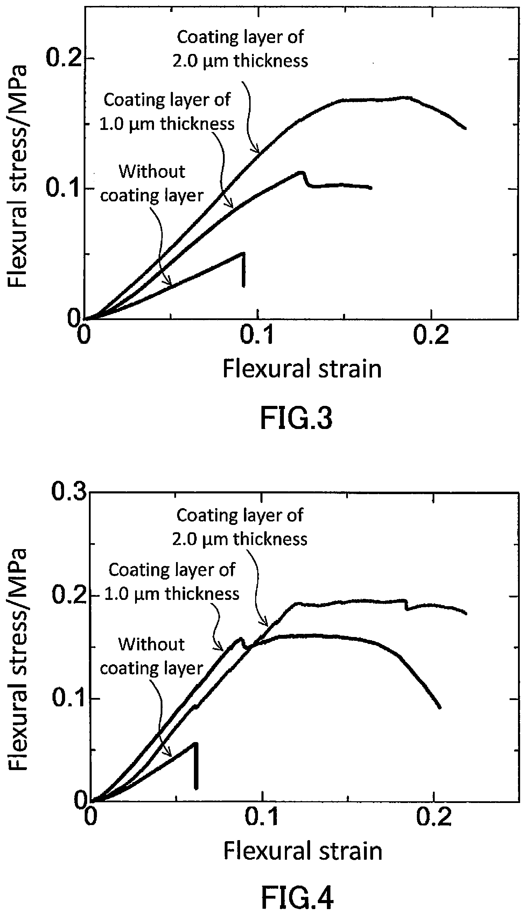

FIG. 3 is a graph showing results of a three-point flexural test conducted in examples for a low-density gel product produced in Production Example 1 which has no coating layer on the surface thereof and low-density gel products produced in Example 1 each of which has a coating layer (thickness: 1.0 µm or 2.0 µm, thickness d2: 2.0 µm or 4.0 µm) on the surface thereof.
FIG. 4 is a graph showing results of a three-point flexural test conducted in examples for a low-density gel product produced in Production Example 2 which has no coating layer on the surface thereof and low-density gel products produced in Example 2 each of which has a coating layer (thickness: 1.0 µm or 2.0 µm, thickness d2: 2.0 µm or 4.0 µm) on the surface thereof.

### DESCRIPTION OF EMBODIMENTS

A first aspect of the present disclosure provides a low-density gel product having a coating layer on a surface thereof, the coating layer being composed of a polymer of a gas-phase polymerizable monomer.

A second aspect of the present disclosure provides the low-density gel product as set forth in the first aspect, wherein the monomer is at least one selected from an olefin, styrene, a styrene derivative, (meth)acrylic acid, a (meth)acrylic acid ester, para-xylylene, and a para-xylylene derivative.

A third aspect of the present disclosure provides the low-density gel product as set forth in the first aspect, wherein the monomer is at least one selected from para-xylylene and a para-xylylene derivative.

A fourth aspect of the present disclosure provides the low-density gel product as set forth in any one of the first to third aspects, wherein the coating layer has a thickness of 0.1 to 10 µm.

A fifth aspect of the present disclosure provides the low-density gel product as set forth in any one of the first to fourth aspects, being a monolithic body.

A sixth aspect of the present disclosure provides the low-density gel product as set forth in any one of the first to fifth aspects, wherein a ratio d2/d1 of a thickness d2 (µm) of the coating layer to a thickness d1 (µm) of the low-density gel product is 0.001 to 1%.

A seventh aspect of the present disclosure provides the low-density gel product as set forth in any one of the first to sixth aspects, being an aerogel or a xerogel.

An eighth aspect of the present disclosure provides the low-density gel product as set forth in any one of the first to seventh aspects, being an organic-inorganic hybrid gel.

A ninth aspect of the present disclosure provides a method for producing a low-density gel product, including allowing gas-phase polymerization of a gas-phase polymerizable monomer to take place in a system containing a low-density gel product as a precursor, thereby forming a coating layer composed of a polymer of the monomer on a surface of the precursor to obtain a low-density gel product having the coating layer on the surface thereof.

A tenth aspect of the present disclosure provides the method for producing a low-density gel product as set forth in the ninth aspect, wherein the monomer is at least one selected from an olefin, styrene, a styrene derivative, (meth)acrylic acid, a (meth)acrylic acid ester, para-xylylene, and a para-xylylene derivative.

An eleventh aspect of the present disclosure provides the method for producing a low-density gel product as set forth in the ninth aspect, wherein the monomer is at least one selected from para-xylylene and a para-xylylene derivative.

A twelfth aspect of the present disclosure provides the method for producing a low-density gel product as set forth in any one of the ninth to eleventh aspects, wherein the precursor is a monolithic body, and a low-density gel product having the coating layer on a surface thereof is obtained as a monolithic body.

A thirteenth aspect of the present disclosure provides the method for producing a low-density gel product as set forth in any one of the ninth to twelfth aspects, wherein the precursor and the obtained low-density gel product are each an aerogel or a xerogel.

A fourteenth aspect of the present disclosure provides the method for producing a low-density gel product as set forth in any one of the ninth to thirteenth aspects, wherein the precursor and the obtained low-density gel product are each an organic-inorganic hybrid gel.

### [Low-density gel product]

FIG. 1 shows an example of the low-density gel product of the present disclosure. The low-density gel product 1 shown in FIG. 1 has a coating layer 3 on a surface thereof. More specifically, the low-density gel product 1 has a main gel portion 2 which is a low-density gel product and the coating layer 3 formed on a surface of the main gel portion 2. The coating layer 3 is composed of a polymer of a gas-phase polymerizable monomer.

The low-density gel product 1 has an improved mechanical strength due to the presence of the coating layer 3 composed of the polymer on the surface of the low-density gel product 1. The mechanical strength can be expressed, for example, by flexural strength, strength against shear deformation, or compressive strength. The flexural strength can be evaluated, for example, by a three-point flexural test according to JIS K 7171.

Conventional low-density gel products such as aerogels and xerogels, due to their structure, are brittle and have low toughness and ductility. The flexural strength of the low-density gel product 1 is higher than the flexural strength exhibited by conventional low-density gel products and can be, for example, 0.05 MPa or more. The low-density gel product 1 can exhibit significantly-reduced brittleness and improved mechanical strength which are expressed by a flexural strength of 0.1 MPa or more, 1 MPa or more, or even 2 MPa or more, depending on the type of the low-density gel product 1 or main gel portion 2 and on the features of the coating layer 3 such as the type (composition) of the polymer composing the coating layer 3 and the thickness of the coating layer. For example, an organic-inorganic hybrid low-density gel product having a skeleton composed of an organopolysiloxane such as a silsesquioxane (RSiO_{1.5}) structure has a higher mechanical strength than a low-density gel product having a skeleton composed of silica (SiO₂). R in the silsesquioxane structure is a hydrogen atom, alkyl, alkenyl, or alkynyl and may be alkyl. The term "organic-inorganic hybrid" means that an inorganic portion (-Si-O-) and an organic portion (R-O-) are combined at molecular level, as typically shown by the structural formula of silsesquioxane. In an organic-inorganic hybrid gel, high brittleness specific to the inorganic portion may be ameliorated by the organic portion, or an additional function may be provided by the organic portion.

The flexural strength of the low-density gel product 1 varies also depending on its shape and thickness. For example, when the low-density gel product 1 is in the form of a monolithic body such as a sheet, rectangular parallelepiped body, or disc, the low-density gel product 1 exhibits such a high mechanical strength that the flexural strength at a thickness of 1 µm is, for example, 0.1 MPa or more and can be 1 MPa or more or even 2 MPa or more depending on the type of the low-density gel product 1 (main gel portion 2) and the features of the coating layer 3.

Comparing the improved mechanical strength of the low-density gel product 1 with the mechanical strength of a conventional low-density gel product having no coating layer 3 and having the same shape and thickness, the flexural strength of the low-density gel product 1 is, for example, two or more times the flexural strength of the conventional low-density gel product and can, depending on the features of the coating layer 3, reach 10 or more times, or even 20 or more times, the flexural strength of the conventional low-density gel product. This can be paraphrased as follows: the flexural strength of the low-density gel product 1 is, for example, two or more times the flexural strength exhibited by the main gel portion 2 alone and can, depending on the features of the coating layer 3, reach 10 or more times, or even 20 or more times, the flexural strength exhibited by the main gel portion 2 alone.

Depending on the features of the coating layer 3, breaking strain can also be used as an index of the mechanical strength of the low-density gel product 1. The breaking strain can be evaluated, for example, by a three-point flexural test as mentioned above.

Low-density gel products such as aerogels and xerogels, due to their structure, are brittle and have low toughness and ductility. The breaking strain of the low-density gel product 1 can, depending on the features of the coating layer 3, be greater than the breaking strain exhibited by conventional low-density gel products and be, for example, 8% or more. The low-density gel product 1 can exhibit significantly-reduced brittleness and improved mechanical strength which are expressed by a breaking strain of 10% or more, 20% or more, or even 30% or more, depending on the type of the low-density gel product 1 (main gel portion 2) and the features of the coating layer 3.

Examples of conventional low-density gel products improved in terms of brittleness include gel products having a reinforcing material such as fibers incorporated therein (see JP 5(1993)-49910 A, for example). In such a gel product, however, the reinforcing material incorporated can cause disturbance or loss of the structure specific to low-density gel products, and the above-mentioned distinctive properties (such as transparency, low density, and low thermal conductivity) cannot be reliably achieved at sufficient levels; in some instances, the properties may be lost. More specifically, for example, the low-density gel structure may become less homogeneous, which results in a decrease in transparency and/or porosity or an increase in thermal conductivity and/or density (namely, an increase in weight). By contrast, in the low-density gel product 1, the coating layer 3 is disposed on the surface of the main gel portion 2, and the main gel portion 2 maintains the structure specific to low-density gel products. Therefore, unlike the conventional gel products improved in terms of brittleness, the low-density gel product 1 does, in principle, not lose the structure specific to low-density gel products and can attain the above distinctive properties. It should be understood that, for use in an application where deterioration in the properties poses no problem, the low-density gel product 1 and main gel portion 2 may have the above reinforcing material incorporated therein. One known low-density gel product is a low-density gel product having nanofibers such as carbon nanofibers or alumina nanofibers introduced selectively into the skeleton thereof (see Gen Hayase et al., "Ultralow-Density, Transparent, Superamphiphobic Boehmite Nanofiber Aerogels and Their Alumina Derivatives", Chem. Mater., 27(1), pp. 3-5 (2015), for example). This low-density gel product is different from a gel product having a reinforcing material incorporated therein such as a gel product as disclosed in JP 5-49910 A or, more specifically, from a gel product having a reinforcing material introduced indiscriminately into both the skeleton and pores. The above low-density gel product having nanofibers introduced selectively into the skeleton thereof holds the structure specific to low-density gel products. Naturally, this low-density gel product may be the main gel portion 2 of the low-density gel product 1.

The improved mechanical strength of the low-density gel product 1 allows it to present greater geometric flexibility and better handleability than conventional low-density gel products. The low-density gel product 1 can be, for example, in the form of a monolithic body such as a sheet, rectangular parallelepiped body, or disc and can have a large size.

The main gel portion 2 is not particularly limited as long as it is a low-density gel product, and can be a known low-density gel product. The low-density gel product is a gel product in which pores having a small pore size of about 1000 nm or less, preferably 100 nm or less, more preferably 50 nm or less, and the gel skeleton form together a three-dimensional network structure and whose density is 0.5 g/cm³ or less, preferably 0.2 g/cm³ or less, and more preferably 0.15 g/cm³. The pore size of the pores can be determined, for example, by porosimetry based on a nitrogen adsorption method. The average pore size of the pores of the low-density gel product (the pore size corresponds to D₅₀ in a pore size distribution obtained by porosimetry) is, for example, 10 to 1000 nm.

The main gel portion 2 and low-density gel product 1 are each typically an aerogel or xerogel. When the main gel portion 2 is an aerogel or xerogel, the low-density gel product 1 is an aerogel or xerogel having the coating layer 3 on a surface thereof.

The material composing the skeleton of the main gel portion 2 and low-density gel product 1 can be a material composing the skeleton of a known low-density gel product. Examples of the skeleton-composing material include silica (SiO₂), organic polymers, carbon, metal oxides such as alumina (Al₂O₃) and titania (TiO₂), and organopolysiloxanes such as a silsesquioxane (RSiO_{1.5}) structure (in the case of which the material is polysilsesquioxane). R in the silsesquioxane structure is a hydrogen atom, alkyl, alkenyl, or alkynyl and may be alkyl. When R is alkyl, R is, for example, a methyl or ethyl group and may be a methyl group. When R is alkenyl, R is, for example, a vinyl group. A gel product having a skeleton composed of an organopolysiloxane is generally called an organic-inorganic hybrid gel. That is, the main gel portion 2 and low-density gel product 1 may be an organic-inorganic hybrid gel. When the main gel portion 2 is an organic-inorganic hybrid gel, the low-density gel product 1 is an organic-inorganic hybrid gel having the coating layer 3 on a surface thereof. Organic-inorganic hybrid gels are disclosed, for example, in Patent Literatures 1 and 2 and Non Patent Literature 1. With methods disclosed in these documents, an organic-inorganic hybrid gel having any of various shapes including those of monolithic bodies can be formed.

The coating layer 3 is composed of a polymer of a gas-phase polymerizable monomer. The gas-phase polymerizable monomer refers to a monomer having gas-phase polymerizability (polymerizability in gaseous state). The gas-phase polymerizable monomer can undergo gas-phase polymerization.

From the viewpoint of further improvement in mechanical strength of the low-density gel product 1, the gas-phase polymerizable monomer is preferably, but not limited to, a monomer whose polymer (homopolymer) is glassy at ordinary temperature (20°C), namely a monomer whose polymer has a glass transition temperature (Tg) higher than ordinary temperature. In this case, the coating layer 3 is a glassy polymer layer. The gas-phase polymerizable monomer is preferably a monomer whose polymer has a Tg of 50°C or higher and more preferably a monomer whose polymer has a Tg of 100°C or higher.

The polymer composing the coating layer 3 may be a homopolymer of one gas-phase polymerizable monomer or may be a copolymer of two or more gas-phase polymerizable monomers. As long as gas-phase polymerization can be accomplished, the polymer composing the coating layer 3 may be a copolymer of the gas-phase polymerizable monomer and another substance and may be, for example, a copolymer of the gas-phase polymerizable monomer and carbon dioxide (CO₂). In the present specification, such a copolymer is also considered a polymer of the gas-phase polymerizable monomer. The Tg of the polymer and coating layer 3 is preferably higher than ordinary temperature, more preferably 50°C or higher, and even more preferably 100°C or higher, irrespective of whether the polymer composing the coating layer 3 is a homopolymer or copolymer.

The gas-phase polymerizable monomer is, for example, at least one selected from an olefin, styrene, a styrene derivative, (meth)acrylic acid, a (meth)acrylic acid ester, para-xylylene, and a para-xylylene derivative. To increase the Tg of the polymer and further improve the mechanical strength of the low-density gel product 1, the gas-phase polymerizable monomer is preferably at least one selected from para-xylylene and a para-xylylene derivative.

The olefin is, for example, at least one selected from ethylene and propylene.

The para-xylylene is a monomer represented by the following formula (1).

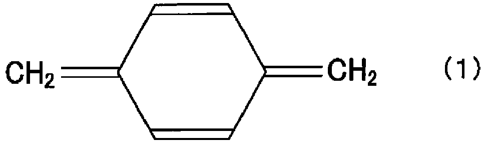

The para-xylylene derivative is, for example, a monomer represented by the following formula (2) or (3).

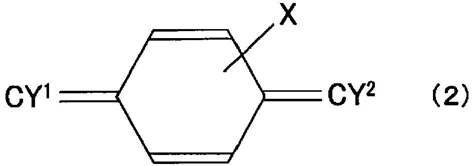

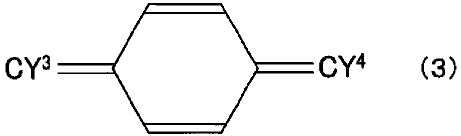

X in the formula (2) is a substituent for a hydrogen atom bonded to a carbon atom included in the skeleton of the aromatic ring. In the formula (2), at least one of the four hydrogen atoms is substituted by the substituent X. When two or more of the hydrogen atoms are substituted by the substituents X, all of the substituents X may be the same, only some of the substituents X may be the same, or all of the substituents X may be different. The substituent X is at least one selected from a halogen atom, amino group, alkylamino group, carboxyl group, and aldehyde group and may be a halogen atom. The halogen atom is at least one selected from a fluorine atom, chlorine atom, bromine atom, and iodine atom and may be a chlorine atom. Y¹ and Y² in the formula (2) are each independently H₂, HF, or F₂, and both Y¹ and Y² may be H₂ or F₂ or may be H₂. Y³ and Y⁴ in the formula (3) are each independently HF or F₂.

Polymerized films formed from para-xylylene or a para-xylylene derivative are used, in some cases, as insulating films for electronic components, semiconductor devices, and sensors in consideration of the low dielectric constant of the polymerized films. However, in such conventional uses, the electronic components on which the polymerized films are formed have high strength by themselves, and the polymerized films cannot provide any improvement in the strength of these components. Additionally, the formation of the polymerized films cannot increase the geometric flexibility of the components themselves. At least in these respects, the coating layer 3 of the low-density gel product 1 is a layer completely distinct from the conventional polymerized films.

In particular, the fact that the above-described improvement in flexural strength is achievable in the low-density gel product 1 evidences that the coating layer 3 is a layer completely distinct from the conventional polymerized films. This is so because the improvement in flexural strength is achieved due to the main gel portion 2 and coating layer 3 being deformed together. Additionally, any suitable approach for improving the mechanical strength properties such as flexural strength of low-density gel products has not existed in the past. Also from this, it should be understood that the coating layer 3 exerts a significant effect in the low-density gel product 1.

The styrene derivative is, for example, at least one selected from methylstyrene and chlorostyrene.

The (meth)acrylic acid ester is, for example, at least one selected from methyl (meth)acrylate, hydroxyethyl (meth)acrylate, butyl (meth)acrylate, and (meth)acrylic-modified silicone. (Meth)acrylic-modified silicone is preferred due to its high adhesiveness to organopolysiloxanes.

The coating layer 3, being composed of a polymer of a gas-phase polymerizable monomer, can be very thin. The thickness of the coating layer 3 is, for example, 0.1 to 10 µm. From the viewpoint of the balance between the improvement in mechanical strength of the low-density gel product 1 and the achievement of properties derived from the main gel portion 2, such as from the viewpoint of improving the mechanical strength of the low-density gel product 1 while allowing the low-density gel product 1 including the coating layer 3 to maintain as much as possible the properties of the main gel portion 2 which is a low-density gel product, the thickness of the coating layer 3 is preferably 0.1 to 5 µm and more preferably 0.2 to 5 µm. The coating layer 3 can be formed to be very thin and at the same time resistant to separation from the main gel portion 2.

The low-density gel product 1 can have an improved mechanical strength even when the thickness of the coating layer 3 is small relative to the thickness of the main gel portion 2. In a specific example, a ratio d2/d1 of the thickness d2 (µm) of the coating layer 3 to the thickness d1 of the low-density gel product 1 may be 0.001 to 1% and, from the viewpoint of the above-described balance, the ratio d2/d1 is preferably 0.001 to 0.5% and more preferably 0.002 to 0.5%. Even when the coating layer 3 is such a thin layer, the low-density gel product 1 can, for example, exhibit a flexural strength as described above. In this case, the low-density gel product 1 is typically in the form of a sheet, rectangular parallelepiped body, or disc. When the coating layer 3 is formed on both principal faces of the low-density gel product 1 that is in the form of a sheet, rectangular parallelepiped body, or disc, the thickness d2 in the ratio d2/d1 refers to the sum of the thickness of the coating layer 3 on one of the principal faces and the thickness of the coating layer 3 on the other principal face. When the low-density gel product 1 is in another form, for example, a straight line is assumed to extend through the entire gel product 1 by a shortest path passing through the center of gravity of the gel product 1, and the length of this shortest path can be defined as the thickness d1 of the low-density gel product 1. The total thickness of the coating layer 3 through which the straight line passes can be defined as the thickness d2 of the coating layer 3 in the ratio d2/d1.

The coating layer 3, being composed of a polymer of a gas-phase polymerizable monomer, can be formed as a highly homogeneous layer, for example as a coating layer with reduced defects. For the same reason, the coating layer 3 can be formed as a layer of highly uniform thickness. These advantages can be obtained even when the shape of the main gel portion 2 (the shape of the surface of the main gel portion 2, for example) is complicated or when the size of the main gel portion 2 is large. This also contributes to the fact that the low-density gel product 1 having an improved mechanical strength can be obtained despite the small thickness of the coating layer 3 and that the geometric flexibility of the low-density gel product 1 can be great. Additionally, the coating layer 3, being designed as described above, can reduce the formation of flaws on the surface of the low-density gel product 1 and the risk of the low-density gel product 1 suffering fracture originated from the formed flaws.

The coating layer 3 can have the function of reducing penetration of any matter into the main gel portion 2 from the outside of the low-density gel product 1. In order to reduce penetration of external matter, the coating layer 3 may be formed, for example, over the entire surface of the main gel portion 2 or on a portion of the surface of the main gel portion 2. Specifically, for example, the coating layer 3 may be formed on one or both of the principal faces of the main gel portion 2 that is in the form of a sheet, rectangular parallelepiped body, or disc. An example of the external matter is water vapor. If water vapor penetrates into a low-density gel product, the gel product suffers a deterioration in properties such as an increase in thermal conductivity.

The low-density gel product 1 shown in FIG. 1 has the coating layer 3 covering its entire surface (the entire surface of the main gel portion 2). The low-density gel product of the present disclosure may have the coating layer 3 formed at least on the surface of a portion of the low-density gel product (at least on the surface of a portion of the main gel portion 2). In a specific example, the coating layer 3 is placed over the whole or a part of one or both of the principal faces of the low-density gel product 1 (main gel portion 2).

The low-density gel product of the present disclosure may be in a form in which the coating layer 3 is formed only on the surface of the main gel portion 2. In other words, the low-density gel product of the present disclosure may be in a form in which the coating layer 3 is not formed within the main gel portion 2 (the main gel portion 2 does not have the coating layer 3 in its inside). Thus, the uniformity of the structure of the low-density gel product of the present disclosure can be high, and the properties based on this structure can more reliably be achieved.

The shape of the low-density gel product of the present disclosure is not limited. The low-density gel product 1 can have a shape that the main gel portion 2 can have. This, coupled with the improvement in mechanical strength, is expected to enable the low-density gel product of the present disclosure to have a wider variety of applications than conventional low-density gel products. The low-density gel product of the present disclosure may be in the form of particles, to which the low-density gel product is not limited. For example, the low-density gel product may be in the form of a sheet as shown in FIG. 1 or may be in the form of a bulk (or cake) such as a rectangular parallelepiped body or disc. That is, the low-density gel product of the present disclosure may be a monolithic body such as a sheet or bulk. The fact that the low-density gel product 1 is a monolithic body, coupled with the improved mechanical strength of the low-density gel product 1, allows the low-density gel product 1 to be handled more easily than conventional low-density gel products which are in the form of particles. Additionally, the low-density gel product 1 can be a low-density gel product having superior properties and/or high uniformity of the properties, such as a low-density gel product having high transparency and low thermal conductivity, as compared to any low-density gel product obtained by aggregating particles and forming the aggregate into a particular shape. Furthermore, the low-density gel product 1 can be a monolithic body of large size. Such a low-density gel product 1 is suitable for various applications such as for use in thermal insulators and/or acoustic insulators. For example, it is expected that a multiple insulated glazing unit having high transparency and low thermal conductivity can be constructed by sandwiching the low-density gel product 1 in the form of a sheet, rectangular parallelepiped body, or disc between a pair of glass sheets.

The great geometric flexibility of the low-density gel product of the present disclosure is attributed also to the fact that the coating layer 3 is composed of a polymer of a gas-phase polymerizable monomer, namely the fact that the coating layer 3 can be formed by gas-phase polymerization. If, for example, a coating layer is formed by applying or attaching a resin to the surface of the main gel portion 2 and then melting the resin, the formed coating layer cannot be thin or have a large area due to high viscosity of the molten resin. It is also highly probable that the molten resin causes damage to the porous structure of the main gel portion 2. By contrast, the coating layer 3 can be formed to have high uniformity and/or a large area, and the gas-phase polymerization allows formation of the coating layer 3 with reduced damage to the porous structure of the main gel portion 2. Additionally, the coating layer 3 is free of problems such as those arising in the case of applying an aqueous emulsion such as a vinyl acetate polymer emulsion to the surface of the gel product, in particular the difficulty of spreading of the emulsion over the surface of the gel product.

The low-density gel product of the present disclosure can have high transparency. For example, when the low-density gel product is a sheet, rectangular parallelepiped body, or disc with a thickness of 10 mm, the total light transmittance of the low-density gel product, as measured according to JIS K 7361, can be 70% or more and can, depending on the features of the main gel portion 2 and coating layer 3, be 80% or more, 85% or more, or even 90% or more. The same applies to the transparency of the main gel portion 2; that is, it can be said that the high transparency of the main gel portion 2 can be maintained in the low-density gel product 1.

The low-density gel product of the present disclosure can have a high porosity. The low-density gel product 1 can have a porosity of, for example, 70 to 90%. The porosity of the low-density gel product can be evaluated by a nitrogen adsorption method or pycnometry. The same applies to the porosity of the main gel portion 2; that is, it can be said that the high porosity of the main gel portion 2 can be maintained in the low-density gel product 1.

The low-density gel product of the present disclosure can have a low density (specific gravity). The low-density gel product 1 can have a density of, for example, 0.5 g/cm³ or less and can, depending on the features of the main gel portion 2 and coating layer 3, have a density of 0.2 g/cm³ or less, 0.15 g/cm³ or less, or even 0.1 g/cm³ or less. The same applies to the density of the main gel portion 2; that is, it can be said that the low density of the main gel portion 2 can be maintained in the low-density gel product 1.

The low-density gel product of the present disclosure can have a low thermal conductivity. The low-density gel product 1 can have a thermal conductivity of, for example, 20 mWm⁻¹K⁻¹ or less and can, depending on the features of the main gel portion 2 and coating layer 3, have a thermal conductivity of 15 mWm⁻¹K⁻¹ or less or even 12 mWm⁻¹K⁻¹ or less. The thermal conductivity of the low-density gel product can be evaluated according to JIS A 1412 (steady-state method). The same applies to the thermal conductivity of the main gel portion 2; that is, it can be said that the low thermal conductivity of the main gel portion 2 can be maintained in the low-density gel product 1.

The low-density gel product of the present disclosure can, if necessary, have a member other than the main gel portion 2 and coating layer 3. It should be understood that the low-density gel product of the present disclosure may consist of the main gel portion 2 and coating layer 3. The other member is, for example, a coupling agent layer or primer (silicone-based primer, for example) layer provided between the main gel portion 2 and coating layer 3 to enhance the bonding strength between the main gel portion 2 and coating layer 3 when the bonding strength between the material composing the main gel portion 2 and the material composing the coating layer 3 is low. The coupling agent layer or primer layer can be provided between the main gel portion 2 and coating layer 3, for example, by forming, prior to formation of the coating layer 3 through gas-phase polymerization, the coupling agent layer or primer layer on the surface of the main gel portion 2 on which the coating layer 3 is to be formed.

The applications of the low-density gel product of the present disclosure are not limited, and the low-density gel product can be used in the same applications as conventional low-density gel products. The low-density gel product of the present disclosure has high mechanical strength and has great flexibility in possible shapes. The low-density gel product of the present disclosure can therefore be used, with the above distinctive properties reliably maintained, in applications where conventional low-density gel products are difficult to use or where conventional low-density gel products are usable but inevitably suffer a deterioration in the distinctive properties. Examples of such applications include light-transmissive thermal insulators, in particular light-transmissive thermal insulation sheets of large area for use in insulated window structures for houses and transportation facilities.

The low-density gel product of the present disclosure can be produced, for example, by a method for producing a low-density gel product according to the present disclosure.

### [Method for producing low-density gel product]

In the production method of the present disclosure, gas-phase polymerization of a gas-phase polymerizable monomer is allowed to take place in a system containing a low-density gel product as a precursor (this low-density gel product will be simply referred to as "precursor" hereinafter). As a result of this gas-phase polymerization, the coating layer 3 composed of a polymer of the monomer is formed on the surface of the precursor, and thus the low-density gel product 1 having the coating layer 3 on the surface thereof is obtained. After the process of the formation of the coating layer 3 by this gas-phase polymerization, the precursor serves as the main gel portion 2.

The shape, skeleton-composing material, and properties of the precursor are not limited, as long as the precursor is a low-density gel product. These features of the precursor may be the same as those of the main gel portion 2 described above for the low-density gel product of the present disclosure.

The precursor may be, for example, an aerogel or xerogel or may be an organic-inorganic hybrid gel. When the precursor is an aerogel or xerogel, the low-density gel product obtained by the production method of the present disclosure is also an aerogel or xerogel. When the precursor is an organic-inorganic hybrid gel, the low-density gel product obtained by the production method of the present disclosure is also an organic-inorganic hybrid gel.

In the production method of the present disclosure, the coating layer 3 can be formed without causing any change in the shape of the precursor. For example, the formation of the coating layer 3 does not require crushing of a low-density gel product used as the precursor. The precursor may be a monolithic body and, in this case, the low-density gel product obtained by the production method of the present disclosure can be the low-density gel product 1 that is in the form of a monolithic body having the coating layer 3 on the surface thereof. The shape of the obtained low-density gel product can be the same as that of the precursor.

The method for forming the precursor is not limited, and the precursor can be formed according to a known method for producing a low-density gel product, such as a known method for producing an aerogel and/or xerogel. For example, the production methods described in Patent Literatures 1 and 2 and Non Patent Literature 1 offer great geometric flexibility and are capable of giving a precursor in the form of particles or in the form of a monolithic body such as a sheet or a bulk such as a rectangular parallelepiped body or disc.

The method for carrying out gas-phase polymerization of a gas-phase polymerizable monomer to form the coating layer 3 composed of a polymer of the monomer on the surface of the precursor is not limited, and a method including a conventional gas-phase polymerization process can be employed. For example, a method can be employed in which the gas-phase polymerizable monomer in a gaseous state is introduced into a film formation chamber containing the precursor and polymerization of the gas-phase polymerizable monomer is allowed to take place in the chamber. The film formation chamber can be equipped with mechanisms for keeping the internal atmosphere of the chamber suitable for the gas-phase polymerization, such as a temperature control mechanism, a pressure control mechanism, and a mechanism for controlling the concentration of the gas-phase polymerizable monomer in the chamber. Another substance capable of gas-phase polymerization with the gas-phase polymerizable monomer may be additionally introduced into the film formation chamber. The other substance is, for example, carbon dioxide mentioned above.

The gas-phase polymerizable monomer is the same as the gas-phase polymerizable monomer described above for the low-density gel product of the present disclosure.

The method for introducing the gas-phase polymerizable monomer into the system containing the precursor is not limited, as long as the monomer is in a gaseous state during the gas-phase polymerization. For example, the monomer in a gaseous state may be supplied to the system (a film formation chamber, for example), or the monomer in a liquid or solid state may be supplied toward the system and vaporized into a gas in the supply path and/or system. For example, the gas-phase polymerizable monomer itself may be introduced into the system or, in consideration of higher ease of handling, a monomer precursor such as a dimer or oligomer of the monomer may be supplied toward the system and converted to a gaseous monomer in the supply path and/or system so as to allow gas-phase polymerization to take place. For example, when the gas-phase polymerizable monomer is para-xylylene or a para-xylylene derivative, a method can be employed in which a para-xylylene dimer or para-xylylene derivative dimer which is solid at room temperature and therefore easy to handle is supplied toward the system and thermally decomposed into a gaseous monomer in the supply path. Thermal decomposition of the para-xylylene dimer or para-xylylene derivative dimer creates an equilibrium state between the gaseous monomer and a biradical species. The biradical species is stable in a gas phase, and the gas-phase polymerization of the biradicals proceeds.

In the gas-phase polymerization, a polymerization catalyst, a chain transfer agent, a stable radical species etc. may be added to the system.

The conditions of the gas-phase polymerization can be selected depending on the type of the gas-phase polymerizable monomer and the efficiency of the formation of the coating layer 3. For example, when the gas-phase polymerizable monomer is para-xylylene or a para-xylylene derivative, the temperature of the gas-phase polymerization is preferably about 150°C or lower in order to increase the efficiency of the formation of the coating layer 3.

In the production method of the present disclosure, the formation of the coating layer 3 is carried out by gas-phase polymerization, and thus the coating layer 3 can be formed to be highly homogeneous and/or of highly uniform thickness. Even when the surface on which the coating layer 3 is formed has a large area, such as when the precursor is of large size, the coating layer 3 can be formed to be highly homogeneous and/or of highly uniform thickness. Furthermore, even when the surface on which the coating layer 3 is formed has a complicated shape, such as when the precursor has a complicated shape, the coating layer 3 can be formed to be highly homogeneous and/or of highly uniform thickness.

In the production method of the present disclosure, the coating layer 3 is formed by gas-phase polymerization on the precursor having a three-dimensional network structure made up of very fine pores and the skeleton of the precursor. Thus, the coating layer 3 can be formed only on the surface of the precursor. This means that, with the production method of the present disclosure, damage to the porous structure of the precursor during the formation of the coating layer 3 can be reduced.

In the production method of the present disclosure, the gas-phase polymerization may be allowed to take place with the surface of the precursor being masked in part so that the coating layer 3 is formed only on the surface of a portion of the precursor. Thus, the low-density gel product 1 having the coating layer 3 only on the surface of a portion thereof can be formed. The "surface of a portion" may, for example, be the whole or a part of one or both of the principal faces of the precursor that is in the form of a sheet, rectangular parallelepiped body, or disc.

The production method of the present disclosure may include any step other than the steps described above, as long as a low-density gel product having on a surface thereof a coating layer composed of a polymer of a gas-phase polymerizable monomer can be obtained.

### EXAMPLES

Hereinafter, the present invention will be described in more detail by examples. The present invention is not limited to the examples given below.

### (Production Example 1: Production of Precursor)

In Production Example 1, a monolithic body of a xerogel which is an organic-inorganic hybrid gel was produced as a precursor.

0.40 g of hexadecyltrimethylammonium bromide (H0081, manufactured by Tokyo Chemical Industry Co., Ltd.) was dissolved as a surfactant in 10 g of a 0.005 mol/L aqueous acetic acid solution which is an acidic aqueous solution, and subsequently 3.0 g of urea (21000095, manufactured by Hayashi Pure Chemical Ind., Ltd.) was further added and dissolved as a hydrolyzable compound. To the resulting acidic aqueous solution was added 5 mL of methyltrimethoxysilane (MTMS; LS-530 manufactured by Shin-Etsu Chemical Co., Ltd.) as a silicone compound, and the whole mixture was stirred at room temperature for 30 minutes to allow hydrolysis of MTMS to proceed. Thereafter, the resulting mixture was allowed to stand in a closed container (maintained at 60°C with a thermostatic bath) having an internal space of rectangular parallelepiped shape for 240 minutes so as to allow a sol-gel reaction of the MTMS hydrolysate to proceed. Next, the resulting gel was left to age at 60°C for 96 hours, after which the aged gel was taken out and subjected to solvent replacement with methanol. The solvent replacement consisted of five cycles, in each of which solvent replacement was performed with fresh methanol at 60°C for 24 hours. Next, the gel was subjected to further solvent replacement with a low surface tension solvent (n-hexane; 08000389, manufactured by Hayashi Pure Chemical Ind., Ltd.) and then dried to remove the solvent, giving xerogel monoliths (size: 10 mm wide × 30 mm long × 4.7 mm thick and 20 mm wide × 30 mm long × 4.0 mm thick). The drying was performed at a temperature equal to or lower than the boiling point of the solvent, with the solvent evaporation rate per 1 cm³ of the gel being controlled at 0.2 g/(hour•cm³) for 4 hours from the start of the drying and then decreased gradually. The drying was stopped once the weight of the gel became constant.

### (Production Example 2: Production of Precursor)

In Production Example 2, a monolithic body of a silica aerogel was produced as a precursor.

To 4 mL of tetramethoxysilane (TMOS; LS-540, manufactured by Shin-Etsu Chemical Co., Ltd.) was added 7.2 mL of methanol (000-48665, manufactured by KISHIDA CHEMICAL Co., Ltd.), and the mixture was homogenized by stirring. While the solution was stirred, 2.0 mL of 100 mM aqueous ammonia was added, and the stirring was further continued for 30 minutes. The stirring was then stopped, and the reaction solution was gelled by allowing it to stand in a closed container (maintained at 60°C with a thermostatic bath) having an internal space of rectangular parallelepiped shape for 5 minutes. The gel was left to age at 60°C for 4 days, after which the aged gel was subjected to three cycles of solvent replacement with methanol and three cycles of solvent replacement with 2-propanol (IPA; 01G-64786, manufactured by KISHIDA CHEMICAL Co., Ltd.). Finally, the gel was dried using supercritical carbon dioxide at a pressure of 14 MPa and a temperature of 80°C for 10 hours, giving an aerogel monolith of rectangular parallelepiped shape (size: 10 mm × 30 mm × 5 mm (thickness)).

### (Example 1)

In Example 1, a coating layer 3 composed of poly(monochloro)para-xylylene was formed by gas-phase polymerization on the surface of the xerogel monolith produced in Production Example 1, and thus a low-density gel monolith having a rectangular parallelepiped shape and having the coating layer on the surface thereof was produced. Specifically, the low-density gel monolith was produced as follows.

First, the xerogel produced in Production Example 1 was placed in a film formation chamber, and this chamber was hermetically closed and depressurized. Next, while the pressure inside the chamber was maintained at about 50 mTorr (about 6.7 Pa) and the temperature inside the chamber was maintained at room temperature, a gaseous monochloro-para-xylylene monomer was introduced into the chamber. The monochloro-para-xylylene monomer is represented by the following formula (4).

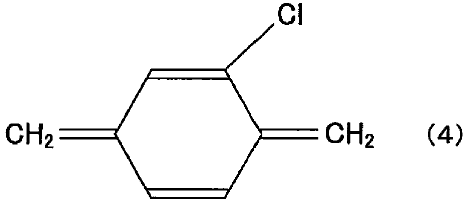

More specifically, the introduction of the monochloro-para-xylylene monomer into the chamber was accomplished by supplying a monochloro-para-xylylene dimer, which is solid at room temperature, into a gasification furnace (furnace temperature: 180°C) provided separately from the film formation chamber, gasifying the dimer in the furnace, supplying the gas of the dimer into a decomposition furnace (furnace temperature: 650 to 700°C) to thermally decompose the gas of the dimer, and supplying the gaseous monomer produced by the thermal decomposition into the film formation chamber. The monomer supplied to the film formation chamber is in equilibrium with a form (biradical species) having radicals generated at the CH₂ groups bonded to the aromatic ring of the monomer, and this biradical species is polymerized to allow gas-phase polymerization to proceed. Through this gas-phase polymerization, a coating layer was formed over the entire surface of the monolithic body, and thus a xerogel monolith having on the surface thereof a coating layer composed of poly(monochloro)para-xylylene was obtained. The shape and size of the obtained low-density gel monolith were the same as those of the monolith before formation of the coating layer, namely the rectangular parallelepiped monolith produced in Production Example 1. The thickness of the coating layer was varied among 0.50 µm, 1.0 µm, and 2.0 µm by changing the time of the gas-phase polymerization. In the three cases, the thickness d2 described above was 1.0 µm, 2.0 µm, and 4.0 µm. For production of the low-density gel monolith having a 0.50-pm-thick coating layer, the 20-mm-wide monolith produced in Production Example 1 was used, while for production of the low-density gel monolith having a 1.0-µm-thick coating layer and the low-density gel monolith having a 2.0-µm-thick coating layer, the 10-mm-wide monolith produced in Production Example 1 was used.

The xerogel monoliths produced in Example 1 which had a coating layer and the xerogel monoliths produced in Production Example 1 which had no coating layer were subjected to a three-point flexural test. For the 20-mm-wide monolith, the length of the support span was set to 40 mm, and the speed of the cross head, which was pressed against the monolith in the thickness direction in the vicinity of the midpoint of the support span during the test, was set to 0.25 mm/min. For the 10-mm-wide monolith, the length of the support span was set to 20 mm, and the speed of the cross head was set to 0.25 mm/min. For each monolith, the test was conducted five to ten times (n = 5 to 10), and the averages of obtained values of Young's modulus, flexural strength, and breaking strain were determined as the Young's modulus, flexural strength, and breaking strain of the monolith. The results of the three-point flexural test are shown in FIGS. 2 and 3.

As shown in FIGS. 2 and 3, the formation of the 0.50-pm-thick coating layer provided an increase in Young's modulus from 0.72 MPa to 1.4 MPa and an increase in flexural strength from 0.030 MPa to 0.065 MPa. The breaking strain was also increased by the 0.50-µm-thick coating layer. The formation of the 1.0-µm-thick coating layer provided an increase in Young's modulus from 0.57 MPa to 1.0 MPa, an increase in flexural strength from 0.050 MPa to 0.11 MPa, and an increase in breaking strain from 10% to 12%. The formation of the 2.0-µm-thick coating layer provided an increase in Young's modulus from 0.57 MPa to 1.2 MPa and an increase in flexural strength from 0.050 MPa to 0.16 MPa. However, in this case, the breaking strain was not able to be clearly determined because the monolith showed yielding. It was thus confirmed that when a coating layer (coating layer composed of a polymer of a gas-phase polymerizable monomer) is formed in such a manner that the ratio d2/d1 of the total thickness d2 of the coating layer to the thickness d1 of the resulting low-density gel product is as small as 0.025%, the low-density gel product has a significantly improved mechanical strength.

A cross-section of each xerogel monolith produced in Example 1 was observed with a scanning electron microscope (SEM). The coating layer was formed only on the surface of the precursor monolith and not within the precursor monolith.

### (Example 2)

In Example 2, a coating layer 3 composed of poly(monochloro)para-xylylene was formed by gas-phase polymerization on the surface of the aerogel monolith produced in Production Example 2, and thus a low-density gel monolith having a rectangular parallelepiped shape and having the coating layer on the surface thereof was produced. Specifically, an aerogel monolith having a coating layer composed of poly(monochloro)para-xylylene and covering the entire surface of the monolith was obtained in the same manner as in Example 1, except that the aerogel monolith produced in Production Example 2 was used as the precursor instead of the xerogel monolith produced in Production Example 1. The shape and size of the obtained low-density gel monolith were the same as those of the monolith before formation of the coating layer, namely the rectangular parallelepiped monolith produced in Production Example 2. The thickness of the coating layer was varied between 1.0 µm and 2.0 µm by changing the time of the gas-phase polymerization. In the two cases, the thickness d2 described above was 2.0 µm and 4.0 µm.

The aerogel monoliths produced in Example 2 which had a coating layer and the aerogel monolith produced in Production Example 2 which had no coating layer were subjected to a three-point flexural test. The length of the support span was set to 20 mm, and the speed of the cross head was set to 0.25 mm/min. For each monolith, the test was conducted five to ten times (n = 5 to 10), and the averages of obtained values of Young's modulus, flexural strength, and breaking strain were determined as the Young's modulus, flexural strength, and breaking strain of the monolith. The results of the three-point flexural test are shown in FIG. 4.

As shown in FIG. 4, the formation of the 1.0-µm-thick coating layer provided an increase in Young's modulus from 0.85 MPa to 1.98 MPa, an increase in flexural strength from 0.049 MPa to 0.15 MPa, and an increase in breaking strain from 6.4% to 11%. The formation of the 2.0-µm-thick coating layer provided an increase in Young's modulus from 0.85 MPa to 1.74 MPa, an increase in flexural strength from 0.049 MPa to 0.20 MPa, and an increase in breaking strain from 6.4% to 15%. It was thus confirmed that when a coating layer (coating layer composed of a polymer of a gas-phase polymerizable monomer) is formed in such a manner that the ratio d2/d1 of the total thickness d2 of the coating layer to the thickness d1 of the resulting low-density gel product is as small as 0.04%, the low-density gel product has a significantly improved mechanical strength.

A cross-section of each aerogel monolith produced in Example 2 was observed with a SEM. The coating layer was formed only on the surface of the precursor monolith and not within the precursor monolith.

The present invention may be embodied in other forms without departing from the spirit or essential characteristics thereof. The embodiments disclosed in this specification are to be considered in all respects as illustrative and not limiting. The scope of the present invention is indicated by the appended claims rather than by the foregoing description, and all changes which come within the meaning and range of equivalency of the claims are intended to be embraced therein.

### INDUSTRIAL APPLICABILITY

The low-density gel product of the present disclosure can be used in the same applications as conventional low-density gel products. The low-density gel product of the present disclosure has higher mechanical strength and greater geometric flexibility than conventional low-density gel products and is therefore promising for use in applications where conventional low-density gel products are difficult to use or where conventional low-density gel products cannot be used without significant deterioration in the distinctive properties specific to low-density gel products.

## Claims

1. A low-density gel product having a coating layer on a surface thereof, the coating layer being composed of a polymer of a gas-phase polymerizable monomer.

2. The low-density gel product according to claim 1, wherein the monomer is at least one selected from an olefin, styrene, a styrene derivative, (meth)acrylic acid, a (meth)acrylic acid ester, para-xylylene, and a para-xylylene derivative.

3. The low-density gel product according to claim 1, wherein the monomer is at least one selected from para-xylylene and a para-xylylene derivative.

4. The low-density gel product according to claim 1, wherein the coating layer has a thickness of 0.1 to 10 µm.

5. The low-density gel product according to claim 1, being a monolithic body.

6. The low-density gel product according to claim 1, wherein a ratio d2/d1 of a thickness d2 (µm) of the coating layer to a thickness d1 (µm) of the low-density gel product is 0.001 to 1%.

7. The low-density gel product according to claim 1, being an aerogel or a xerogel.

8. The low-density gel product according to claim 1, being an organic-inorganic hybrid gel.

9. A method for producing a low-density gel product, comprising allowing gas-phase polymerization of a gas-phase polymerizable monomer to take place in a system containing a low-density gel product as a precursor, thereby forming a coating layer composed of a polymer of the monomer on a surface of the precursor to obtain a low-density gel product having the coating layer on the surface thereof.

10. The method for producing a low-density gel product according to claim 9, wherein the monomer is at least one selected from an olefin, styrene, a styrene derivative, (meth)acrylic acid, a (meth)acrylic acid ester, para-xylylene, and a para-xylylene derivative.

11. The method for producing a low-density gel product according to claim 9, wherein the monomer is at least one selected from para-xylylene and a para-xylylene derivative.

12. The method for producing a low-density gel product according to claim 9, wherein
the precursor is a monolithic body, and
a low-density gel product having the coating layer on a surface thereof is obtained as a monolithic body.

13. The method for producing a low-density gel product according to claim 9, wherein the precursor and the obtained low-density gel product are each an aerogel or a xerogel.

14. The method for producing a low-density gel product according to claim 9, wherein the precursor and the obtained low-density gel product are each an organic-inorganic hybrid gel.
